# EUROPEAN PATENT SPECIFICATION

(11) **EP 2 342 846 B1**
(45) Date of publication and mention of the grant of the patent: **24.04.2013**
(21) Application number: 09779202.2
(22) Date of filing: 24.03.2009
(51) Int. Cl.: H04B 15/00, H04R 3/00, H04R 19/04, H04B 15/02, H04M 1/60

(54) **BIAS ARRANGEMENT AND APPARATUS**
VORSPANNUNGSANORDNUNG UND -VORRICHTUNG
AGENCEMENT ET APPAREIL DE POLARISATION

(30) Priority: 24.09.2008 US 99660 P; 07.11.2008 US 267115
(43) Date of publication of application: 13.07.2011
(73) Proprietor: Sony Ericsson Mobile Communications AB, 221 88 Lund (SE)
(72) Inventor: KÖRNER, Peter, S-222 20 Lund (SE); ULLÉN, Kaj, S-237 36 Bjärred (SE); BIRCH, Magnus, S-217 53 Malmö (SE)
(74) Representative: Banzer, Hans-Jörg
(86) International application number: PCT/EP2009/053457
(87) International publication number: WO 2010/034525

(56) References cited:
- EP-A- 1 742 506
- EP-A- 1 906 704
- US-A- 6 052 603
- US-A1- 2007 297 623
- US-A1- 2008 164 888
- US-A1- 2008 166 001

## Description

### Technical field

The present invention relates to a bias arrangement for an electronic apparatus having an input device, and such an apparatus.

### Background

Input devices, such as microphones or other devices providing an analog signal sensitive to introduced noise, being connected by wire and relying on an applied bias voltage may face electromagnetic compatibility problems due to loops being formed e.g. by multiple grounding points. In the case of microphones, high currents to other parts of a device may give rise to voltage fluctuations, which can be discovered in the microphone signal as for example low frequency noise, often called "bumble bee" sound. Other problems that may arise in wired connections using a common reference for input and output devices can be echo effects. These effects normally have to be dealt with by well-balanced designs of how wires and components are positioned and circuitry and signal processing for attenuating known noise. WO 02/056511 discloses an approach for dealing with such noise by enabling generation of a replica of periodic interference that is disturbing a desired signal so as to subtract out an estimation of the periodic interference from the infected signal. The signal is bandpass filtered around an expected frequency of the interfering component, and a fundamental frequency thereof may thereafter be ascertained. Harmonics of the fundamental frequency are generated so as to reconstruct an estimate of the interfering component in the frequency domain using determined weights and Fourier series theory. The interfering component estimate is subtracted to form the received signal to determine a desired component estimate. The weights may be optionally adjusted in a feedback loop.

US 6,052,603 A discloses a biasing arrangement for an electronic apparatus according to the preamble of claim 1. In particular, this document relates to a system for interfacing a communication device with a radio for hands-free operation. An interface between a portable cellular phone and an automobile radio to allow hands-free operation of the phone is housed a remote housing connected to a battery eliminator cigarette lighter adaptor plug for simple installation into an automobile. The interface converts incoming signals from the cellular phone from audio frequency to radio frequency and transmits the signals to the existing automobile radio receiver, wherein the signals are reproduced over the radio speakers. According to an embodiment, the interface is connected to the portable phone by a phone interface socket which comprises eight pins. A microphone is connected to a pin of the phone interface socket through a microphone amplifier circuit. The phone requires that the input to the pin is an audio signal of 0 to 0.5 V peak-to-peak with an 8 V DC bias. A zener diode and a current limiting resistor provide a constant voltage supply for the microphone. The zener diode is also used to develop an 8 V bias noiseless reference voltage to an inverting amplifier.

However, there is also a desire to avoid that these interfering effects occur, or at least alleviate occurrence of them.

### Summary

The present invention is based on the understanding that at least some of the effects occur due to fluctuations in biasing of input devices, both in sense of a provided biasing voltage, but also in sense of a reference voltage, such as ground or an intermediate reference voltage between a positive and a negative voltage level of a power supply. The present invention is also based on the understanding that provision of several voltage reference points forming conductive loops, which will collect electromagnetic energy, contributes to introduction of noise. The inventors have found that by provision of a floating biasing arrangement, i.e. a biasing arrangement that do not rely on voltage of a grounding point which may provide such a conductive loop or which may experience a fluctuation in voltage relative to a grounding point of the input device, the undesired effects can be alleviated.

According to a first aspect, there is provided a biasing arrangement for an electronic apparatus having an input device, the biasing arrangement comprising a bias voltage generator arranged to provide a bias voltage; a bias resistor connected between the bias voltage generator and the input device; and a reference voltage point of the input device, wherein a voltage of the reference voltage point of the input device is provided to the bias voltage generator for controlling the bias voltage in relation to the voltage of the reference voltage point of the input device.

The reference voltage may be a ground voltage.

The bias voltage generator may comprise an amplifier having its output connected to the bias resistor, its positive input connected to the reference voltage point of the input device; a feedback resistor connected between the output of the amplifier and a negative input of the amplifier; and a current generator connected to the negative input of the amplifier and arranged to drive a current to a negative supply voltage.

The arrangement may comprise a signal output, wherein the biasing resistor and the input device are connected in series between the bias voltage generator output and a reference voltage, and the signal output is connected such that the alternating voltage over the biasing resistor is provided as an output signal.

The input device may comprise a field effect transistor having its drain and source connected to terminals of the analog input arrangement; and a capacitive sensor connected between gate and source of the field effect transistor. The capacitive sensor may be any of a condenser microphone, a microelectromechanical system sensor, and a liquid capacitive inclinometer.

The arrangement may further comprise a transistor connected between the biasing resistor and the input device with the collector of the transistor connected to the biasing resistor, the emitter of the transistor connected to the input device, and the base connected to a voltage for providing a bias point such that a signal swing of the output signal at the connection to the biasing resistor is provided.

The signal output may comprise connections to respective terminals of the biasing resistor, and at least one of the connections comprises a capacitor for alternating current coupling of the output signal.

According to a second aspect, there is provided an electronic apparatus having an input device, and a biasing arrangement, wherein the biasing arrangement comprises a bias voltage generator arranged to provide a bias voltage; a bias resistor connected between the bias voltage generator and the input device; and a reference voltage point of the input device, wherein a voltage of the reference voltage point of the input device is provided to the bias voltage generator for controlling the bias voltage in relation to the voltage of the reference voltage point of the input device.

The reference voltage may be a ground voltage.

The bias voltage generator may comprise an amplifier having its output connected to the bias resistor, its positive input connected to the reference voltage point of the input device; a feedback resistor connected between the output of the amplifier and a negative input of the amplifier; and a current generator connected to the negative input of the amplifier and arranged to drive a current to a negative supply voltage.

The apparatus may comprise a signal output, wherein the biasing resistor and the input device are connected in series between the bias voltage generator output and a reference voltage, and the signal output is connected such that the alternating voltage over the biasing resistor is provided as an output signal.

The input device may comprise a field effect transistor having its drain and source connected to terminals of the analog input arrangement; and a capacitive sensor connected between gate and source of the field effect transistor. The capacitive sensor may be any of a condenser microphone, a microelectromechanical system sensor, and a liquid capacitive inclinometer.

The apparatus may further comprise a transistor connected between the biasing resistor and the input device with the collector of the transistor connected to the biasing resistor, the emitter of the transistor connected to the input device, and the base connected to a voltage for providing a bias point such that a signal swing of the output signal at the connection to the biasing resistor is provided.

The signal output may comprise connections to respective terminals of the biasing resistor, and at least one of the connections comprises a capacitor for alternating current coupling of the output signal.

The input device of the apparatus may comprise a microphone.

The apparatus may comprise a wired connection to the input device which comprises an antenna, wherein the antenna is connected to a radio receiver of the apparatus and separated from an audio input circuitry of the apparatus by a choke coil. The apparatus may further comprising an output device, wherein the reference voltage point is used as reference voltage also for an output device. The output device of the apparatus may comprise at least one speaker. The wired connection to the input device may comprise a connector for detaching the input device from the apparatus.

### Brief description of drawings

Fig. 1 is a diagram schematically illustrating a prior art biasing arrangement.
Fig. 2 is a diagram schematically illustrating a biasing arrangement according to an embodiment.
Fig. 3 is a diagram schematically illustrating a biasing arrangement according to an embodiment.
Fig. 4 is a diagram schematically illustrating parts of an electronic apparatus according to an embodiment.
Fig. 5 illustrates a bias voltage generator according to an embodiment.
Figs 6 to 11 schematically illustrate examples of suitable current generators arranged to provide a constant current.
Fig. 12 schematically illustrates a voltage generator suitable for generation of a constant voltage.
Fig. 13 schematically illustrates that a voltage divider of a current generator is fed by another current generator to provide the defined voltage to e.g. a base of a transistor, which thereby provides a constant current I.
Fig. 14 is a diagram schematically illustrating an exemplary input device.
Fig. 15 is a diagram schematically illustrating a circuit arrangement according to an embodiment.
Fig. 16 illustrates an electronic apparatus according to an embodiment.

### Detailed description

For biasing, a biasing resistor can be connected to a supply voltage and to an analog input arrangement. The analog input arrangement is traditionally connected to a reference voltage, e.g. ground, such that biasing resistor and the analog input arrangement are connected in series between the supply voltage and the reference voltage. The signal over the analog input arrangement is traditionally connected by a signal output to provide an output signal. The signal output preferably comprises a capacitor for alternating current (AC) coupling of the output signal.

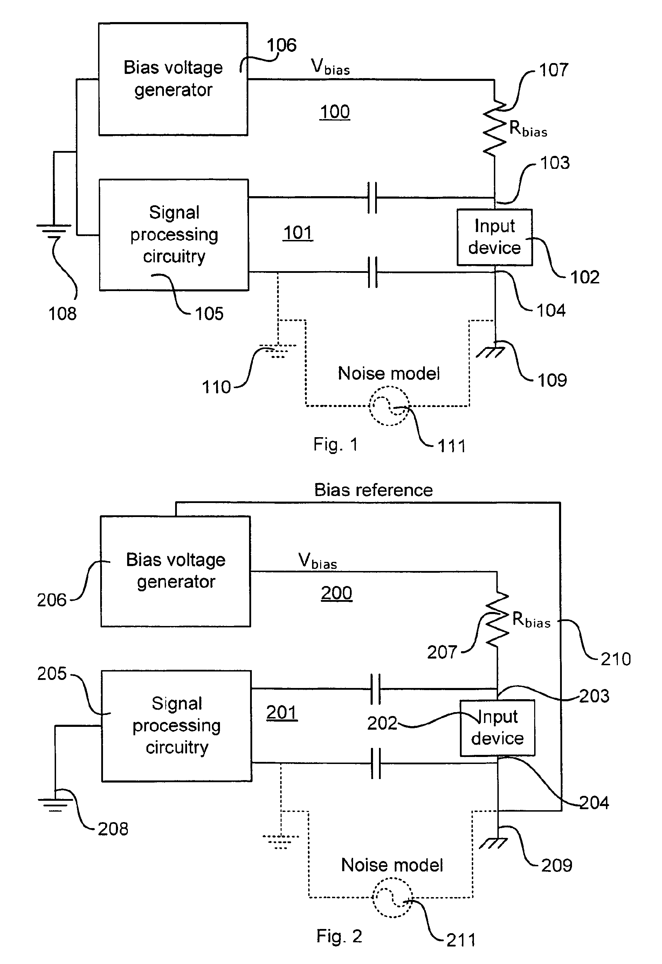

Fig. 1 is a diagram schematically illustrating a prior art biasing arrangement 100. The biasing arrangement 100 is applicable e.g. for an electronic apparatus 101 having an input device 102 connected by wires 103, 104 to signal processing circuitry 105 of the electronic apparatus 101. The biasing arrangement 100 comprises a bias voltage generator 106 arranged to provide a bias voltage Vbias. A reference voltage Vref can be ground or an intermediate reference voltage between a positive and a negative voltage level of a power supply. The bias voltage Vbias is a voltage assigned to the input device 102 to work properly. Thus, the voltage over the input device 102 will be the voltage difference between the reference voltage Vref and a portion of the bias voltage Vbias, which is divided between the input device 102 and a biasing resistor 107 to enable a suitable swing of the input device 102.

The biasing arrangement 100, which is a part of the electronic apparatus 101, and other circuitry of the electronic apparatus, such as the signal processing circuitry 105, normally has a voltage reference, such as ground 108. The input device 102 is also connected to a reference voltage 109, which is preferred to have the same voltage as the other reference voltage 108 of the electronic apparatus 101. The reference voltage 109, which preferably is arranged close to the input device 102, will give proper protection against electro-static discharges. However, due to different physical locations of reference voltage points 108, 109, 110, there can be a difference in voltage, normally an alternating difference, which can be modelled as an alternating current voltage source 111 between the reference voltage points 108, 110 and 109, respectively. This will add noise to the signal provided to the signal processing circuitry 105 from the input device 102.

The present invention alleviates this problem by providing a floating bias generator. This can be implemented according to the principles illustrated in Fig. 2, which for illustrative purposes is made as similar as possible to the prior art solution illustrated in Fig. 1.

In Fig. 2, there is illustrated a biasing arrangement 200 of an electronic apparatus 201 having an input device 202 connected by wires 203, 204 to signal processing circuitry 205 of the electronic apparatus 201. Similar to the prior art solution demonstrated with reference to Fig. 1, the biasing arrangement 200 comprises a bias voltage generator 206 arranged to provide a bias voltage Vbias, and a biasing resistor 207, but here the biasing arrangement 200 is made floating from a reference voltage 208 of the electronic apparatus 201. Instead, from a reference voltage 209 of the input device 202, there is a connection 210 to the bias voltage generator 206 such that the bias voltage generator 206 can be able to provide the bias voltage Vbias in relation to the actual reference voltage 209 of the input device 202. Thus, noise added by a modelled alternating current voltage source 211 between the reference voltage points 208 and 209 will not add noise in the same way to the signal provided to the signal processing circuitry 205 from the input device 202 since common mode rejection of the signal processing circuitry 205 will be able to handle this. It is preferable that the signal processing circuitry 205 has sufficient input impedance for this common mode rejection, e.g. at least 100 kΩ.

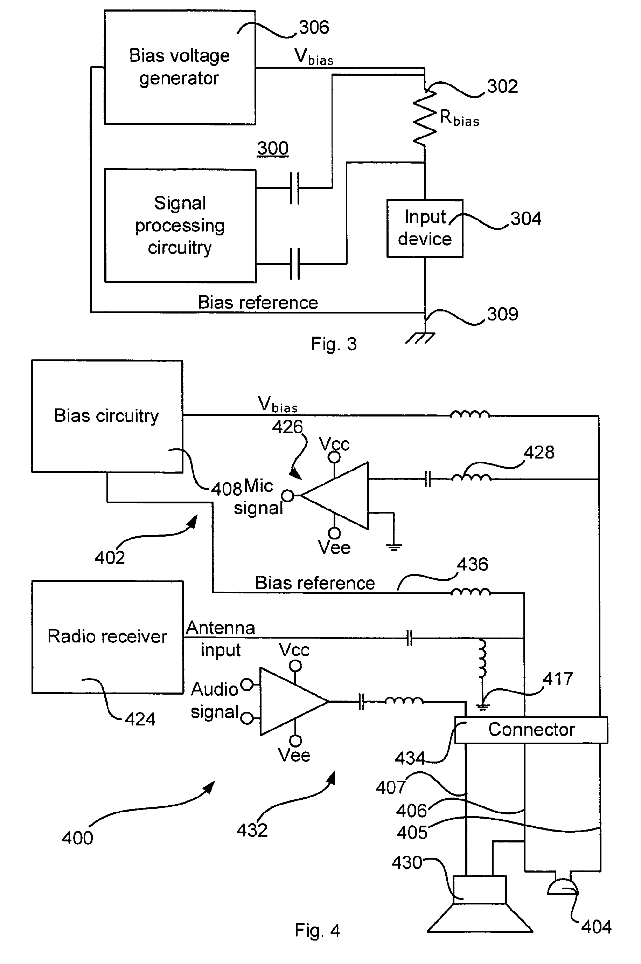

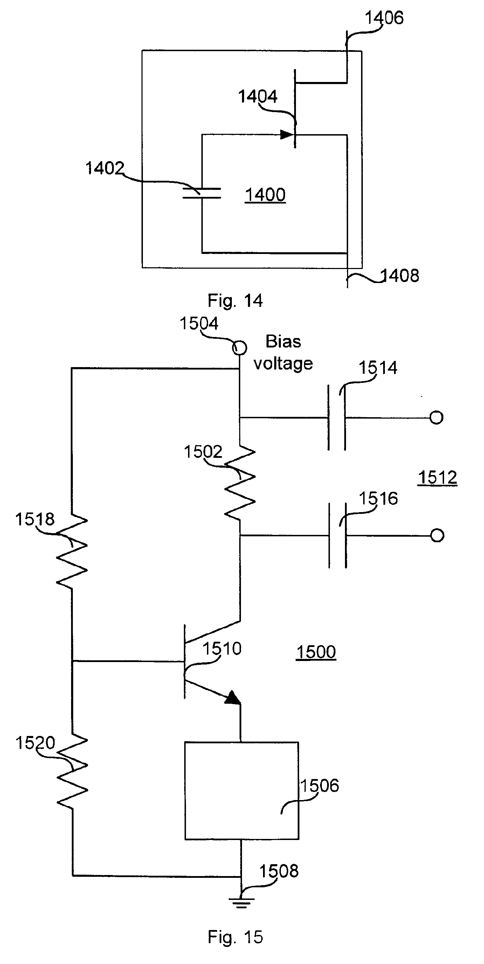

Fig. 3 schematically illustrates an electronic apparatus 300 similar to the one illustrated in Fig. 2, but with the difference that the signal is taken across the bias resistor 302. This configuration provides for a further rejection of noise, here from any noise present in the bias voltage. A noise rejection of typically 26 dB can be achieved. A substantive common mode rejection can also be achieved. Considering a case where the input device 304 has an analog sensor element and a field effect transistor (FET) as schematically illustrated in Fig. 14, where the FET has its drain and source connected to the terminals of the input device 304, a further improvement is also at option. The analog sensor element can be a capacitive sensor connected between gate and source of the FET. The capacitive sensor can for example be a condenser microphone, a microelectromechanical system sensor, or a liquid capacitive inclinometer. Upon registration of a physical phenomenon, such as sound, force or inclination, the capacitance of the analog sensor element changes. Thus, an applied charge, which is provided by the biasing arrangement as demonstrated above, on the analog sensor element causes the voltage over the input device 304 to change. The input device can also be an electronic circuit or device providing input over the gate and source of the field effect transistor. The further advantage can be achieved by arranging a transistor, as schematically illustrated in Fig. 15, connected between the biasing resistor 302 and the input device 304 with the collector of the transistor connected to the biasing resistor 302, the emitter of the transistor connected to the input device 304, such that the biasing resistor 302, the transistor and the input device 304 are connected in series between the bias voltage generator 306 and the reference voltage 309. The base of the transistor is connected to a voltage, e.g. provided by a voltage divider, for providing a bias point such that a signal swing of the output signal at the connection to the biasing resistor 302 is provided. By this configuration and considering the configuration having the transistor and the FET, it can be seen that the transistor and the FET will be in cascode, which has been found to be beneficial. The signal of the input device 304 is no longer superposed on its driving voltage. If the base of the transistor is properly connected to a low impedance, the transistor will work as an emitter follower, which has low impedance at its emitter, which provides the driving voltage to the input device 304. The signal from the input device 304 will be present at the collector of the transistor, and by the properly applied voltage to the base, the collector will swing to provide the output signal across the biasing resistor 302. The voltage to the base of the transistor can be controlled to achieve further effects, such as adapting sensitivity of the analog input arrangement. Preferably, the transistor is a bipolar npn transistor, which is particularly beneficial since it provides low output impedance and good control properties regarding voltage applied on the base. However, if high power is to be output or for other reasons, a more robust transistor or another suitable active device such as a MOSFET can be used.

Fig. 4 is a diagram schematically illustrating parts of an electronic apparatus 400 including a biasing arrangement 402 according to an embodiment. The apparatus has an input device 404, e.g. a microphone, connected by wires 405, 406. The biasing arrangement 402 comprises a bias signal generator 408 arranged to provide a bias voltage Vbias, similar to what is described with reference to Fig. 2.The biasing arrangement 402 thus further comprises a bias reference connection to a ground point 406 of the input device 404, i.e. a ground point located as close as possible and connected to the input device, which bias reference is used by the bias signal generator 408 to provide the bias voltage in relation to the bias reference. The wired connection can further comprise a filter for filtering the bias voltage. The filter can be a low-pass filter.

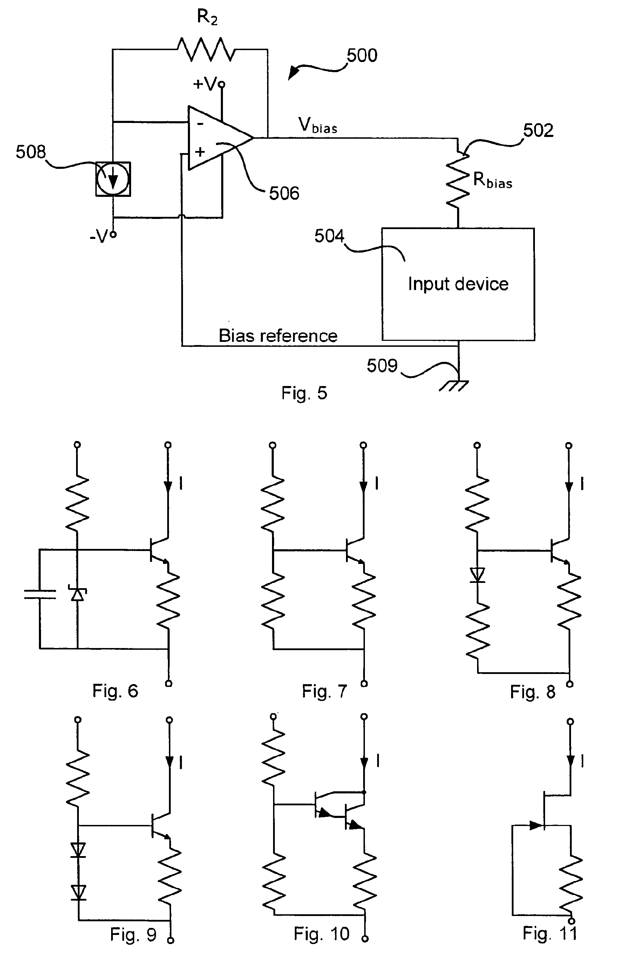

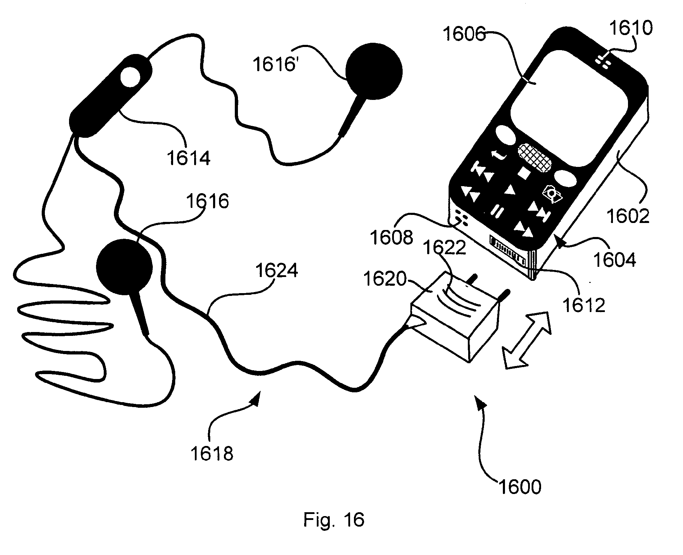

The wired connection to the input device can further comprise an antenna, wherein the antenna is connected to a radio receiver 424 of the apparatus 400 and separated from an audio input circuitry 426 of the apparatus 400 by a choke coil 428. The apparatus 400 can further comprise an output device 430, e.g. one or more speakers, which is also connected by wires 406, 407, wherein the ground point 417 is used as reference voltage also for the output device 430. The output device 430 is for example driven by an output signal circuitry 432, which has its output connected to the wire 407. The wired connection to the input device 404, and preferably also the output device 430, can comprise a connector 434 for detaching the input device 404, and preferably also the output device 430, from the apparatus 400, as will be further illustrated below with reference to Fig. 16. The bias voltage can be generated by the bias signal generator 408 by observing the bias reference signal 436 such that a feedback loop is provided. The set-up can be modified as demonstrated with reference to Figs 3, 14 and 15, with different ways of taking out the desired signal, as well as with added circuitry for further noise handling. An embodiment of this will be demonstrated with reference to Fig. 5 below.

Fig. 5 illustrates a bias voltage generator 500 connected to a bias resistor 502 and an input device 504. The set-up can be modified as demonstrated with reference to Figs 3, 14 and 15, with different ways of taking out the desired signal, as well as with added circuitry for further noise handling. The bias voltage generator comprises an amplifier 506, preferably an operational amplifier, supplied with a positive and a negative power supply voltages +V, -V. A negative feedback is provided by a resistor R₂, which is also connected to the negative power supply voltage -V via a current generator 508, which can be of any suitable type, e.g. as any of the examples that will be given with reference to Figs 6 to 13. A bias reference signal taken from a grounding point 509 of the input device 504 is connected to the positive input of the amplifier 506. The amplifier will, though its feedback, make its negative and positive inputs to have the same potential, which is achieved when the voltage over the feedback resistor R₂ is the potential difference between V_{bias} and the bias reference. Since the current generator 508 will provide a constant current I, which in practice also will flow through the feedback resistor R₂, the potential difference between V_{bias} and the bias reference will always be R₂I, which thus will be provided over the bias resistor 502 and the input device 504. A floating and correct bias will thus be provided, irrespective of other grounding points of an apparatus in which the arrangement is provided, and noise problems as those demonstrated with reference to Fig. 1 will be alleviated.

Figs 6 to 13 schematically illustrates examples of suitable current generators arranged to provide a constant current, which can be used in any of the embodiments demonstrated with reference to Fig.5.

The example illustrated in Fig. 6 relies on a zener diode tuned by a capacitor for noise reduction, which zener diode provides a defined voltage to a base of a transistor, which thereby provides a constant current I.

The example illustrated in Fig. 7 relies on a voltage divider which provides a defined voltage to a base of a transistor, which thereby provides a constant current I.

The example illustrated in Fig. 8 relies on a voltage divider which provides a defined voltage to a base of a transistor, which thereby provides a constant current I. The voltage divider is further provided with a diode for compensating voltage over base and emitter of the transistor.

The example illustrated in Fig. 9 relies on a diode for compensating voltage over base and emitter of the transistor and a further diode for defining a voltage to a base of a transistor, which thereby provides a constant current I.

The example illustrated in Fig. 10 relies on a voltage divider which provides a defined voltage to a darlington pair, which thereby provides a constant current I.

The example illustrated in Fig. 11 relies on a junction field effect transistor with a source resistor arranged to provide a gate to source voltage, which thereby provides a constant current I.

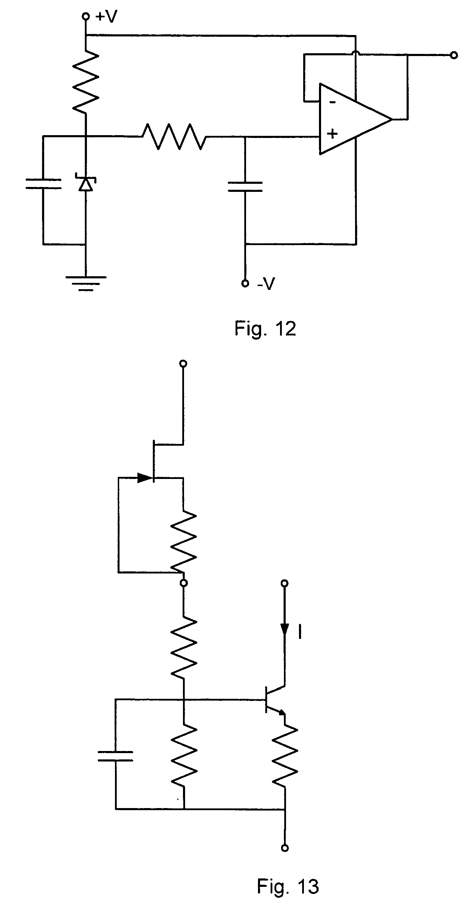

The example illustrated in Fig. 12 relies on a zener diode filtered by a capacitor for noise reduction, which zener diode provides a defined voltage to a positive input of an amplifier via a low-pass filter. The amplifier, which can be an operational amplifier, is provided with a feedback from its output to its negative input, and thereby provides a constant voltage, which can be used for bias generation. This can in turn be used for generation of a constant current, e.g. by providing the constant voltage to a base of a transistor, for example directly or via a voltage divider.

The example illustrated in Fig. 13 illustrates that a voltage divider of a current generator, for example as the one illustrated in Fig. 7, is fed by another current generator, for example as the one illustrated in Fig. 11, to provide the defined voltage to e.g. a base of a transistor, which thereby provides a constant current I. Any of the current generators illustrated with reference to Figs 6 to 10, and 12 relying on a provided voltage can be used, and any of the current generators illustrated with reference to Figs 6 to 11 can be used to provide the current to the voltage divider, respectively.

Any unwanted AC components of the supply voltage provided by the biasing arrangement, which ideally should have pure direct current (DC) properties, may propagate through the series coupling, i.e. the input device and the biasing resistor, and the signal output and add noise to the output signal. Below, a few approaches how to cope with such unwanted AC components will be demonstrated.

Fig. 14 is a diagram schematically illustrating an exemplary input device 1400 with a sensor element 1402 and a field effect transistor (FET) 1404. The FET has its drain and source connected to terminals 1406, 1408 of the input device 1400. The sensor element 1402 is preferably a capacitive sensor connected between gate and source of the FET 1404. The capacitive sensor can for example be a condenser microphone, a microelectromechanical system sensor, or a liquid capacitive inclinometer. Upon registration of a physical phenomenon, such as sound, force or inclination, the capacitance of the sensor element 1402 changes. Thus, an applied charge, which is provided by the biasing arrangement as demonstrated above, on the sensor element 1402 causes the voltage over the sensor element 1402 to change. The sensor element 1402 can also be an electronic circuit or device providing input over the gate and source of the field effect transistor.

Fig. 15 is a diagram schematically illustrating a circuit arrangement 1500 according to an embodiment. The circuit arrangement 1500 comprises a biasing arrangement 1502. The biasing arrangement 1502 comprises a biasing resistor connected to a bias voltage 1504, which is provided according to any of the embodiments demonstrated above. An input device 1506 is connected to a reference voltage 1508, e.g. a ground point in vicinity of the input device 1506. A transistor 1510 is connected between the biasing resistor 1502 and the input device 1506 with the collector of the transistor 1510 connected to the biasing resistor 1502, the emitter of the transistor connected to the input device 1506, such that the biasing arrangement 1502, the transistor 1510 and the input device 1506 are connected in series between the supply voltage 1504 and the reference voltage 1508. The signal over the biasing resistor 1502 is connected by a signal output 1512 to provide an output signal from the circuit arrangement 1500. The signal output 1512 preferably comprises capacitors 1514, 1516 for AC coupling of the output signal. The base of the transistor 1510 is connected to a voltage, e.g. provided by a voltage divider 1518, 1520, for providing a bias point such that a signal swing of the output signal at the connection to the biasing resistor 1502 is provided.

In the configuration of Fig. 15, considering the configuration of the input device 1400 demonstrated with reference to Fig. 14, the transistor 1510 and the FET 1404 will be in cascode, which has been found to be beneficial. The signal of the analog input arrangement 1506 is no longer superposed on its driving voltage. If the base of the transistor 1510 is properly connected to a low impedance 1520, the transistor 1510 will work as an emitter follower, which has low impedance at its emitter, which provides the driving voltage to the analog input arrangement 1506. The signal from the analog input arrangement 1506 will be present at the collector of the transistor 1510, and by the properly applied voltage to the base, the collector will swing to provide the output signal across the biasing resistor 1502. The voltage to the base of the transistor 1510 can be controlled to achieve further effects, such as adapting sensitivity of the analog input arrangement. In the illustration of Fig. 15, the transistor 1510 is a bipolar npn transistor, which is particularly beneficial since it provides low output impedance and good control properties regarding voltage applied on the base. However, if high power is to be output or for other reasons, a more robust transistor or another suitable active device such as a MOSFET can be used.

The approach is based on the understanding that at least some of the effects occur due to fluctuations in biasing of input devices in sense of a provided biasing voltage. The approach is also based on the understanding that provision of the analog signal output to an amplifier, taken over the high impedance field effect transistor contributes to taking up a considerable amount of the noise, while an analog signal taken over a series resistor, which is also used for the biasing and having a considerable lower impedance than the arrangement with the analog input and the field effect transistor, reduces the noise component provided to the amplifier. The approach can be used as a substitute, or a complement, to the filter demonstrated with reference to Fig. 4.

For the embodiments of the approach demonstrated with reference to Fig. 3, i.e. getting the signal over a biasing resistor, the scheme of Fig. 4 will be slightly modified in the connection of the signal to the audio input circuit. This modification has been elucidated with reference to Fig. 3, and therefore, no separate scheme illustrating this embodiment of the electronic apparatus is considered necessary for a person skilled in the art to be able to do the modification.

The configuration of Fig. 15 implies that inherent properties of the input input device 1506, as demonstrated with reference to Fig. 14, provides for a rejection of noise present in the bias voltage 1504. A noise rejection of typically 26 dB can be achieved. A substantive common mode rejection can also be achieved.

The approach demonstrated in Fig. 3 and corresponding suggested modifications is based on the understanding that at least some of the effects occur due to fluctuations in biasing of input devices in sense of a provided biasing voltage. The approach is also based on the understanding that provision of the analog signal output to an amplifier, taken over the high impedance field effect transistor contributes to taking up a considerable amount of the noise, while an analog signal taken over a series resistor, which is also used for the biasing and having a considerable lower impedance than the arrangement with the analog input and the field effect transistor, reduces the noise component provided to the amplifier. The approach can be used as a substitute, or a complement, to the filter demonstrated with reference to Fig. 4.

Fig. 16 illustrates an electronic apparatus 1600 according to an embodiment, where the principles of the invention are applicable. The apparatus 1600 can represent an example of the apparatus 400 illustrated by the schematic diagram of Fig. 4. The electronic apparatus 1600 can for example be a mobile phone or a media player/recorder. The apparatus 1600 comprises a main body 1602 having power source, circuitry, user interface, etc. The user interface can comprise a keypad 1604, a display 1606, a microphone 1608 and a speaker 1610. The apparatus also comprises a connector 1612 to which an external microphone 1614 and external speakers 1616, 1616', e.g. forming a headset 1618, can be connected by a connector 1620 of the headset 1618. The connectors 1612, 1620 are arranged to mate each other and provide electrical contacts between the main body circuitry and the input and output devices 1614, 1616, 1616' of the headset 1618 for input and output of signals. The connectors 1612, 1620 can thus be connected and disconnected to each other, which may be facilitated by grippable surfaces 1622 of the connector 1620 of the headset 1618. A wire of a cord 1624 of the headset 1618 can also work as a radio antenna for the apparatus 1600, e.g. in the FM band between 87.5-108.0 MHz, as demonstrated above with reference to Fig. 4.

## Claims

1. A biasing arrangement for an electronic apparatus having an input device (202, 304, 404, 504), the biasing arrangement comprising
a bias voltage generator (206, 306, 408, 500) arranged to provide a bias voltage;
a bias resistor (207, 302, 502) connected between the bias voltage generator and the input device; and
a reference voltage point (209, 309, 509) of the input device,
**characterized in that** a voltage of the reference voltage point of the input device is provided to the bias voltage generator for controlling the bias voltage in relation to the voltage of the reference voltage point of the input device.

2. The arrangement according to claim 1, wherein the reference voltage (209, 309, 505) is a ground voltage.

3. The arrangement according to claim 1 or 2, wherein the bias voltage generator (500) comprises
an amplifier (506) having its output connected to the bias resistor (502), its positive input connected to the reference voltage point (509) of the input device (504);
a feedback resistor (R₂) connected between the output of the amplifier (506) and a negative input of the amplifier (506); and
a current generator (508) connected to the negative input of the amplifier (506) and arranged to drive a current to a negative supply voltage (-V).

4. The arrangement according to claim 3, wherein the biasing resistor (502) and the input device (504) are connected in series between the bias voltage generator (500) output and a reference voltage (509), and a signal output is connected such that the alternating voltage over the biasing resistor (502) is provided as an output signal.

5. The arrangement according to claim 4, further comprising a transistor (1510) connected between the biasing resistor (1502) and the input device (1506) with the collector of the transistor (1510) connected to the biasing resistor (1502), the emitter of the transistor (1510) connected to the input device (1506), and the base connected to a voltage for providing a bias point such that a signal swing of the output signal at the connection to the biasing resistor (1502) is provided.

6. The arrangement according to claim 4 or 5, wherein the signal output comprises connections to respective terminals of the biasing resistor (1502), and at least one of the connections comprises a capacitor (1514, 1516) for alternating current coupling of the output signal.

7. An electronic apparatus having an input device, and a biasing arrangement according to any of claims 1 to 6.

8. The apparatus according to claim 7, wherein the input device (1400) comprises
a field effect transistor (1404) having its drain and source connected to terminals (1406, 1408) of the analog input arrangement (1400); and
a capacitive sensor (1402) connected between gate and source of the field effect transistor (1404).

9. The apparatus according to claim 8, wherein the capacitive sensor (1402) is any of a condenser microphone, a microelectromechanical system sensor, and a liquid capacitive inclinometer.

10. The apparatus according to any of claims 7 to 9, wherein the input device of the apparatus comprises a microphone (1616).

11. The apparatus according to any of claims 7 to 10, comprising a wired connection to the input device which comprises an antenna, wherein the antenna is connected to a radio receiver (424) of the apparatus and separated from an audio input circuitry of the apparatus by a choke coil (428).

12. The apparatus according to claim 11, wherein the wired connection to the input device comprises a connector (434) for detaching the input device (404) from the apparatus (400).

13. The apparatus according to any of claims 7 to 12, further comprising an output device (430), wherein the reference voltage point is used as reference voltage also for an output device (430).

14. The apparatus according to claim 13, wherein the output device (430) of the apparatus (400) comprises at least one speaker.

## Patentansprüche

1. Vorspannungsanordnung für eine elektronische Vorrichtung mit einer Eingabevorrichtung (202, 304, 404, 504), wobei die Vorspannungsanordnung umfasst:
einen Vorspannungsgenerator (206, 306, 408, 500), welcher ausgestaltet ist, eine Vorspannung bereitzustellen;
einen Vorspannungswiderstand (207, 302, 502), welcher zwischen dem Vorspannungsgenerator und der Eingabevorrichtung angeschlossen ist; und
einen Referenzspannungspunkt (209, 309, 509) der Eingabevorrichtung,
**dadurch gekennzeichnet, dass** eine Spannung des Referenzspannungspunkts der Eingabevorrichtung dem Vorspannungsgenerator zum Steuern der Vorspannung in Bezug auf die Spannung des Referenzspannungspunkts der Eingabevorrichtung bereitgestellt wird.

2. Anordnung nach Anspruch 1, wobei die Referenzspannung (209, 309, 505) eine Massespannung ist.

3. Anordnung nach Anspruch 1 oder 2, wobei der Vorspannungsgenerator (500) umfasst:
einen Verstärker (506), dessen Ausgang mit dem Vorspannungswiderstand (502) verbunden ist und dessen positiver Eingang mit dem Referenzspannungspunkt (509) der Eingabevorrichtung (504) verbunden ist;
einen Rückkopplungswiderstand (R₂), welcher zwischen dem Ausgang des Verstärkers (506) und einem negativen Eingang des Verstärkers (506) angeschlossen ist; und
einen Stromgenerator (508), welcher mit dem negativen Eingang des Verstärkers (506) verbunden ist und ausgestaltet ist, einen Strom zu einer negativen Versorgungsspannung (-V) zu treiben.

4. Anordnung nach Anspruch 3, wobei der Vorspannungswiderstand (502) und die Eingabevorrichtung (504) in Reihe zwischen einem Ausgang des Vorspannungsgenerators (500) und einer Referenzspannung (509) angeschlossen sind, und wobei ein Signalausgang derart verbunden ist, dass die Wechselspannung über dem Vorspannungswiderstand (502) als ein Ausgangssignal bereitgestellt wird.

5. Anordnung nach Anspruch 4, ferner umfassend einen Transistor (1510), welcher zwischen dem Vorspannungswiderstand (1502) und der Eingabevorrichtung (1506) angeschlossen ist, wobei der Kollektor des Transistors (1510) mit dem Vorspannungswiderstand (1502) verbunden ist, der Emitter des Transistors (1510) mit der Eingabevorrichtung (1506) verbunden ist und die Basis mit einer Spannung zum Bereitstellen eines Vorspannungspunkts derart verbunden ist, dass eine Signalschwankung des Ausgangssignals an der Verbindung zu dem Vorspannungswiderstand (1502) bereitgestellt wird.

6. Anordnung nach Anspruch 4 oder 5, wobei die Signalausgabe Verbindungen zu entsprechenden Anschlüssen des Vorspannungswiderstandes (1502) umfasst und mindestens eine der Verbindungen eine Kapazität (1514, 1516) für eine Wechselstromkopplung des Ausgangssignals umfasst.

7. Elektronische Vorrichtung mit einer Eingabevorrichtung und einer Vorspannungsanordnung nach einem der Ansprüche 1-6.

8. Vorrichtung nach Anspruch 7, wobei die Eingabevorrichtung (1400) umfasst:
einen Feldeffekttransistor (1404), dessen Drain und Source mit Anschlüssen (1406, 1408) der analogen Eingabeanordnung (1400) verbunden sind; und
einen kapazitiven Sensor (1402), welcher zwischen Gate und Source des Feldeffekttransistors (1404) angeschlossen ist.

9. Vorrichtung nach Anspruch 8, wobei der kapazitive Sensor (1402) ein beliebiger von einem Kondensatormikrophon, einem mikroelektromechanischen Systemsensor und einem flüssigkapazitiven Neigungssensor ist.

10. Vorrichtung nach einem der Ansprüche 7-9, wobei die Eingabevorrichtung der Vorrichtung ein Mikrophon (1616) umfasst.

11. Vorrichtung nach einem der Ansprüche 7-10, umfassend eine drahtgebundene Verbindung zu der Eingabevorrichtung, welche eine Antenne umfasst, wobei die Antenne mit einem Funkempfänger (424) der Vorrichtung verbunden ist und von einem Audioeingangsschaltkreis der Vorrichtung durch eine Drosselspule (428) getrennt ist.

12. Vorrichtung nach Anspruch 11, wobei die drahtgebundene Verbindung zu der Eingabevorrichtung einen Verbinder (434) zum Trennen der Eingabevorrichtung (404) von der Vorrichtung (400) umfasst.

13. Vorrichtung nach einem der Ansprüche 7-12, ferner umfassend eine Ausgabevorrichtung (430), wobei der Referenzspannungspunkt auch als Referenzspannung für eine Ausgabevorrichtung (430) verwendet wird.

14. Vorrichtung nach Anspruch 13, wobei die Ausgabevorrichtung (430) der Vorrichtung (400) mindestens einen Lautsprecher umfasst.

## Revendications

1. Agencement de polarisation pour un appareil électronique comportant un dispositif d'entrée (202, 304, 404, 504), l'agencement de polarisation comprenant :
un générateur de tension de polarisation (206, 306, 408, 500) configuré de façon à délivrer une tension de polarisation ;
une résistance de polarisation (207, 302, 502) connectée entre le générateur de tension de polarisation et le dispositif d'entrée ; et
un point de tension de référence (209, 309, 509) du dispositif d'entrée,
**caractérisé en ce qu'**une tension du point de tension de référence du dispositif d'entrée est délivrée au générateur de tension de polarisation pour commander la tension de polarisation en fonction de la tension du point de tension de référence du dispositif d'entrée.

2. Agencement selon la revendication 1, dans lequel la tension de référence (209, 309, 505) est une tension de masse.

3. Agencement selon la revendication 1 ou 2, dans lequel le générateur de tension de polarisation (500) comprend :
un amplificateur (506) ayant sa sortie connectée à la résistance de polarisation (502), son entrée positive connectée au point de tension de référence (509) du dispositif d'entrée (504) ;
une résistance de rétroaction (R₂) connectée entre la sortie de l'amplificateur (506) et une entrée négative de l'amplificateur (506) ; et
un générateur de courant (508) connecté à l'entrée négative de l'amplificateur (506) et configuré de façon à attaquer un courant à une tension d'alimentation négative (-V).

4. Agencement selon la revendication 3, dans lequel la résistance de polarisation (502) et le dispositif d'entrée (504) sont connectés en série entre la sortie du générateur de tension de polarisation (500) et une tension de référence (509), et une sortie de signal est connectée de telle sorte que la tension alternative sur la résistance de polarisation (502) soit délivrée à titre de signal de sortie.

5. Agencement selon la revendication 4, comprenant de plus un transistor (1510) connecté entre la résistance de polarisation (1502) et le dispositif d'entrée (1506), avec le collecteur du transistor (1510) connecté à la résistance de polarisation (1502), l'émetteur du transistor (1510) connecté au dispositif d'entrée (1506), et la base connectée à une tension pour délivrer un point de polarisation, de telle sorte qu'une oscillation de signal du signal de sortie à la connexion avec la résistance de polarisation (1502) soit délivrée.

6. Agencement selon la revendication 4 ou 5, dans lequel la sortie de signal comprend des connexions avec des bornes respectives de la résistance de polarisation (1502), et au moins l'une des connexions comprend un condensateur (1514, 1516) pour faire alterner le couplage de courant du signal de sortie.

7. Appareil électronique comportant un dispositif d'entrée, et un agencement de polarisation selon l'une quelconque des revendications 1 à 6.

8. Appareil selon la revendication 7, dans lequel le dispositif d'entrée (1400) comprend :
un transistor à effet de champ (1404) ayant son drain et sa source connectés à des bornes (1406, 1408) de l'agencement d'entrée analogique (1400) ; et
un capteur capacitif (1402) connecté entre la grille et la source du transistor à effet de champ (1404).

9. Appareil selon la revendication 8, dans lequel le capteur capacitif (1402) est l'un quelconque d'un microphone à condenseur, d'un capteur à système micro-électro-mécanique et d'un inclinomètre capacitif à liquide.

10. Appareil selon l'une quelconque des revendications 7 à 9, dans lequel le dispositif d'entrée de l'appareil comprend un microphone (1616).

11. Appareil selon l'une quelconque des revendications 7 à 10, comprenant une connexion câblée avec le dispositif d'entrée, qui comprend une antenne, l'antenne étant connectée à un récepteur de radio (424) de l'appareil et séparée de circuits d'entrée audio de l'appareil par une bobine d'arrêt (428).

12. Appareil selon la revendication 11, dans lequel la connexion câblée avec le dispositif d'entrée comprend un connecteur (434) pour détacher le dispositif d'entrée (404) de l'appareil (400).

13. Appareil selon l'une quelconque des revendications 7 à 12, comprenant de plus un dispositif de sortie (430), dans lequel le point de tension de référence est également utilisé comme tension de référence pour un dispositif de sortie (430).

14. Appareil selon la revendication 13, dans lequel le dispositif de sortie (430) de l'appareil (400) comprend au moins un haut-parleur.
